# EUROPEAN PATENT APPLICATION

(11) **EP 0 556 164 A1**
(43) Date of publication of application: **18.08.1993**
(21) Application number: 93830039.9
(22) Date of filing: 03.02.1993
(51) Int. Cl.: H01R 25/14, H02G 3/04

(54) **Multi-function support structure, in particular for electric installations**

(30) Priority: 11.02.1992 IT MI920108 U
(71) Applicant: TEKNO-LIT DI ZUCCHINI E LAZZARONI S.r.l., I-25014 Castenedolo (Brescia) (IT)
(72) Inventor: Lazzaroni, Mauro, I-25086 Rezzato (Brescia) (IT)
(74) Representative: Righetti, Giuseppe

(57) **Abstract**

A multi-function support structure (1) comprises a box-shaped body (2) consisting of one section member (3) adapted to define a longitudinal inner cavity (4) for housing service ducts, and a second section member (5) to be engaged to the first section member (3) so as to form a closing cover for said cavity (4) and define an attachment portion for operating elements accessible externally of the longitudinal cavity itself.

## Description

The present invention relates to a multi-function support structure, in particular for electric installations.

It is known that many types of facilities are increasingly more required in domestic use premises, work and medical centres and others. These facilities are generally distributed by means of ducts of several different types, such as mains-voltage electric cables, fluid-conveying pipes, sheaths containing communication cables, low-voltage electric lines, and similar components.

In addition, there is always a need for appropriate connecting members to be provided at the points of use of the above facilities, such as for example electric sockets, supports for lighting elements, pipe fitting members, hooks for hanging different types of devices, push-button panels and the like.

Usually, when ducts and relavant connecting members have not been put inside the walls during the wall construction, they are subsequently added by fastening them externally of the walls and are therefore unconcealed. While this known solution avoids masonry works, on the other hand it does not often provide installations offering reliable safety guarantees because, for example, live cables are insufficiently protected.

In addition, this solution is not always economically advantageous and of easy accomplishment because it has the drawback that not only fastening of sockets and connecting members must be carried out directly to the walls, ceiling or floor, but also each individual piping or line must be secured thereto, as well as all lighting elements and further elements required at the moment or added at some future time.

Under this situation, the general aim of the present invention is to provide a multi-function support structure, in particular for electric installations, capable of substantially eliminating the above drawbacks.

Within the scope of this general aim, an important object of the present invention is to provide a multifunction support structure enabling a plurality of ducts to be protected by gathering them together in an orderly manner along the intended paths until they reach the use points, thereby avoiding them being directly fastened to the walls, floor or pieces of furniture.

Another important object of the invention is to provide a multi-function structure capable of allowing the operating elements to be readily supported and/or fastened.

The above specified objects are substantially achieved by a multi-function support structure characterized in that it comprises a box-shaped body having a prevailing extension in the longitudinal direction and consisting of at least one section member adapted to define a longitudinal inner cavity and at least a second section member to be engaged to said first section member so as to form a closing cover for said cavity, at least one of said section members exhibiting in said cavity, longitudinal seatings adapted to house service ducts, and least one of said section members defining an attachment portion for operating elements susceptible of being accessible externally of said longitudinal cavity.

The description of a preferred embodiment of a multifunction support structure in accordance with the invention is given hereinafter by way of non-limiting example, with reference to the accompanying drawings, in which:
- Fig. 1 is a cross-sectional view of a multi-function structure of the invention according to one application thereof;
- Fig. 2 shows a second application of two matching wall-supported multi-function structures in accordance with the invention;
- Fig. 3 shows a third application of two ceiling-supported multi-function structures in accordance with the invention;
- Fig. 4 shows a fourth application of a floor-fastened multi-function structure in accordance with the invention.

Referring to the drawing, the multi-function support structure of the invention has been generally identified by reference numeral 1.

It comprises a box-shaped body 2 having a prevailing extension in the longitudinal direction and in turn comprising a first section member 3 defining a longitudinal inner cavity 4 and a second section member 5 to be engaged to the section member 3 so as to form a closing cover for the cavity 4.

In accordance with a preferred but not exclusive embodiment, the first section member 3 has an L-shaped sectional configuration and the second section member 5 is a flat member.

In addition, the first section member 3 on the inner faces of its wings, that is the surfaces facing the cavity 4, is provided with a plurality of differently-shaped longitudinal seatings 6, adapted to house service ducts of different types, depending on requirements.

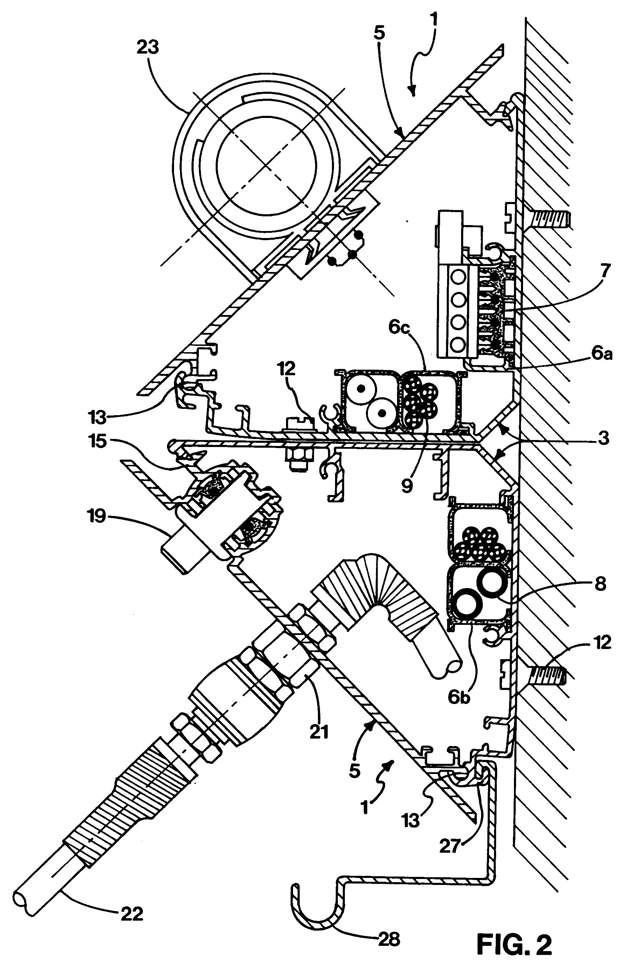

By way of example, in Fig. 2 a four-conductor sheath 7 for conveying mains-voltage current has been positioned within a first seating 6a. Pipes conveying oxygen or other therapeutical gas have been placed in a second seating 6b and a sheath for containing communication cables has been housed in a third seating 6c.

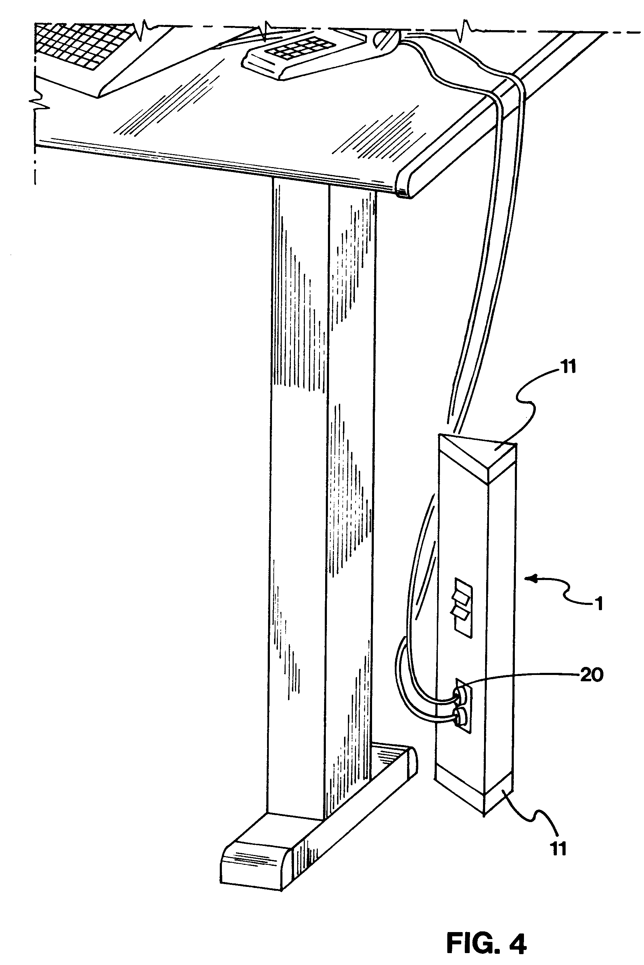

Provision is also made for circular seatings 10 housing screws for fastening of end heads or bases 11 to the box-shaped body 2, as shown in Fig. 4 where the supporting structure 1 is used upright, or securing other elements such as ceiling light fixtures, lighting elements, and the like.

Wall-fastening of the first section member 3 as well as fastening of said member to other similar structures is carried out by means of screws or bolts 12. The second section member 5 in the vicinity of one edge 5a thereof exhibits a longitudinal bulging portion 13 substantially of circular section, adapted to rotatably engage with a corresponding recessed housing 14 provided in the first section member 3 so as to carry out a turning matching between the two section members.

Close to a second edge 5b of the second section member 5, the section member itself is provided with a shaped tailpiece 15 adapted to be snap fitted in a corresponding projection 16 formed in the first section member 3. For safety reasons, the conformation of the shaped tailpiece 15 and projection 16 is such selected that the use of a tool such as a screwdriver is necessary for disengaging the parts from each other and enabling rotation of the second section member 5 about the bulging portion 13 for access to the inside of the cavity 4.

Advantageously, the second section member 5 exhibits a longitudinal groove 17 close to one of its edges, the second edge 5b for example. The longitudinal groove 17 is arranged so that its opening faces externally of the box-shaped body 2 and is adapted to define a track 18 housing low-voltage or mains-voltage electric conductors 18a and also, if necessary, shunters or adapters 19 for lighting elements. Transformers necessary to the low-voltage tracks 18 may be applied to the inner face of the second section member 5, by gluing for example.

In addition and advantageously the second section member 5 may define a useful attachment portion for operating elements designed to be accessible eternally of the cavity 4.

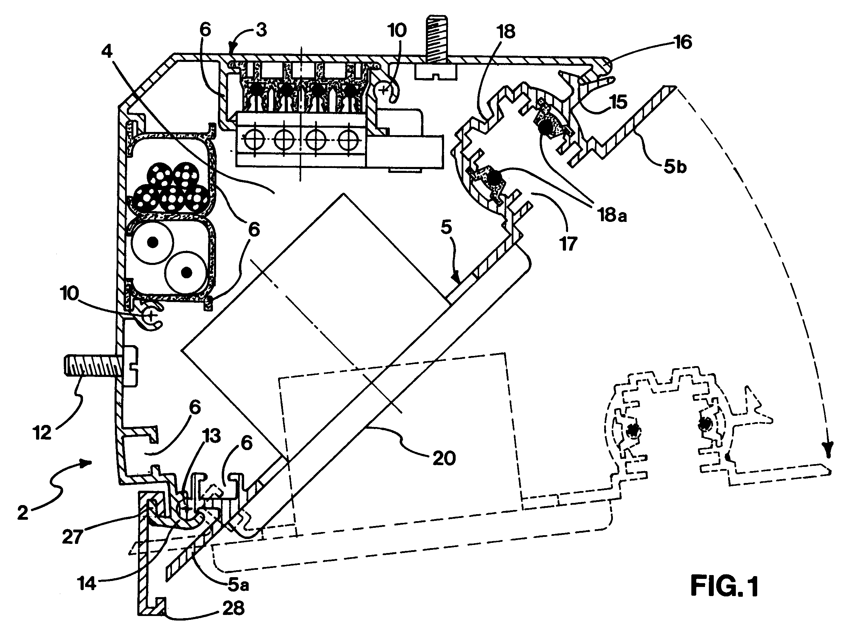

For example, shown in Fig. 1 is a socket unit 20, fitted in a window formed in the second section member. Obviously, a like window for receiving sockets or switches may also be provided in the first section member, if the surfaces thereof are not designed to abut against movable partitions.

Two support structures 1 joined to each other are shown in Fig. 2. At the second section member 5 they support a quick-coupling connecting member 21 for pipes 22 passed through by therapeutical gas and a neon lighting element 23.

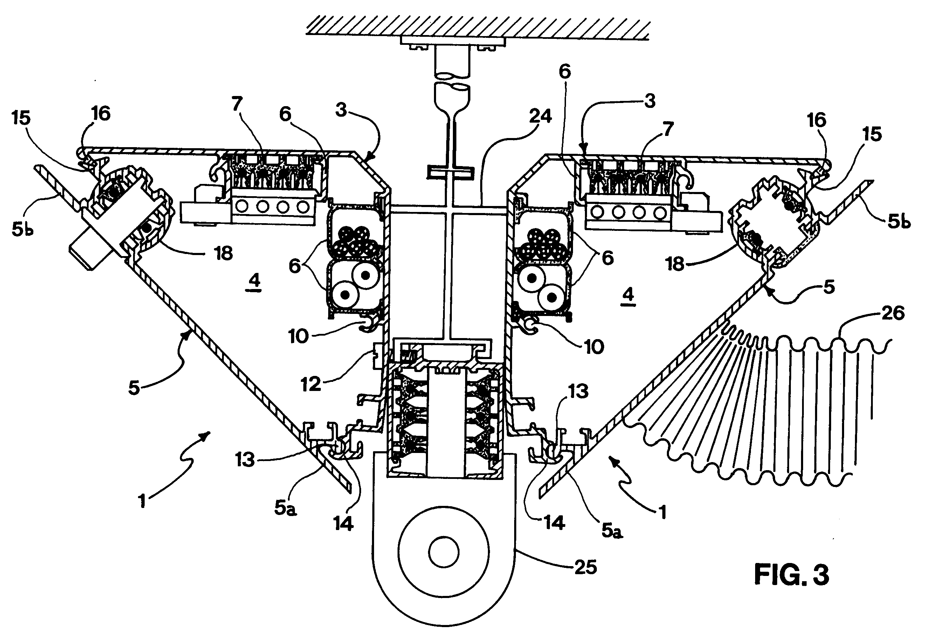

In Fig. 3 two support structures 1 are shown that are joined to each other by a frame 24 fastened to a ceiling and a neon lamp 25 is hanging therefrom. A flexible hose 26 engages with one of the two structures at the second section member 5.

Finally, the first section member 3 exhibits, externally of the cavity 4, a longitudinal bent portion 27 adapted to define a hooking region to which hook:-shaped elements 28 can be engaged for supporting suspended weights, such as phleboclysis vessels or other objects.

A multi-function supporting structure in accordance with the invention described above mainly as regards structure can offer a great variety of uses.

In addition to the already mentioned uses in medical centres, the supporting structure 1 can be applied to the lower part of kitchen wall units, bathroom shelves, bed headboards in hotel rooms or in communities, or to any other piece of furniture, wall or partition.

Structure 1 can be used individually, or joined to other structures. It can consist of a single upright pillar of small height (see Fig. 4) or be as tall as the ceiling, and into which electric and telephone cables from the ceiling and floor are introduced, while sockets, connecting members and push-buttons are arranged externally.

The invention achieves important advantages.

The great flexibility and practical aspects of the multi-function support structure 1 are pointed out. In fact, if for example there is a need for a further cable in an electric installation, it is sufficient to open the box-shaped element 2 by rotating or completely removing the second section member 5 from its location and put the cable in place by forcedly fitting it in one of the longitudinal seatings 6.

In conclusion one the support structure 1 has been secured to a wall or a piece of furniture, cables and pipings can be placed at the inside of the cavity 4 in a rational and orderly manner, so that they are protected and conceiled.

The second section member 5, which is movable with respect to the first section member 3, besides offering an easy access to the cavity 4 is also an appropriate attachment means for all operating elements that one intends to install. No further interventions on walls, ceilings and furniture are required even if modifications, additions or removals of ducts and operating elements are carried out.

All of the details may be replaced by technically equivalent elements and practically materials and sizes may be whatever depending on requirements.

## Claims

1. A multi-function support structure, in particular for electric installations, characterized in that it comprises a box-shaped body (2) having a prevailing extension in the longitudinal direction and consisting of at least one section member (3) adapted to define a longitudinal inner cavity (4) and at least a second section member (5) to be engaged to said first section member (3) so as to form a closing cover for said cavity (4), at least one of said section members (3, 5) exhibiting in said cavity (4), longitudinal seatings (6) adapted to house service ducts, and least one of said section members (3, 5) defining an attachment portion for operating elements susceptible of being accessible externally of said longitudinal cavity (4).

2. A structure according to claim 1, characterized in that said second section member (5) close to one edge (5a) thereof exhibits a longitudinal bulging portion (13) adapted to rotatably engage with a corresponding recessed seating (14) in said section member (3), and close to a second edge (5b) thereof exhibits a shaped tailpiece (15) adapted to be snap-fitted in a corresponding projection (16) in said first section member (3).

3. A structure according to claim 1, characterized in that externally of said cavity (4) said section members (3, 5) exhibit at least one longitudinal groove (17) defining at least one track (18) for electric conductors (18a).

4. A structure according to claim 1, characterized in that externally of said cavity (4) said first section member (3) exhibits at least one longitudinal bent portion adapted to define a hooking region for suspended weights.
